# EUROPÄISCHE PATENTSCHRIFT

(11) **EP 3 516 249 B1**
(45) Veröffentlichungstag und Bekanntmachung des Hinweises auf die Patenterteilung: **29.07.2020**
(21) Anmeldenummer: 17714387.2
(22) Anmeldetag: 03.03.2017
(51) Int. Cl.: F16D 21/00

(54) **MEHRFACHKUPPLUNGSEINRICHTUNG UND HYBRIDMODUL FÜR EIN KRAFTFAHRZEUG**
MULTI-CLUTCH DEVICE AND HYBRID MODULE FOR A MOTOR VEHICLE
SYSTÈME D'EMBRAYAGE MULTIPLE ET MODULE HYBRIDE POUR VÉHICULE AUTOMOBILE

(30) Priorität: 20.09.2016 DE 102016217974
(43) Veröffentlichungstag der Anmeldung: 31.07.2019
(73) Patentinhaber: Schaeffler Technologies AG & Co. KG, 91074 Herzogenaurach (DE)
(72) Erfinder: BAUMANN, Michael, 77886 Lauf (DE); HOFSTETTER, Dirk, 76448 Durmersheim (DE)
(86) Internationale Anmeldenummer: PCT/DE2017/100169
(87) Internationale Veröffentlichungsnummer: WO 2018/054414

(56) Entgegenhaltungen:
- EP-A1- 2 517 915
- WO-A2-2017/028862
- US-A1- 2011 259 698

## Beschreibung

Die Erfindung betrifft eine Mehrfachkupplungseinrichtung für ein Hybridmodul, welches für ein Kraftfahrzeug, wie z.B. einen Pkw, einen Lkw oder ein anderes Nutzfahrzeug vorgesehen ist, und welches an eine Verbrennungskraftmaschine anzukoppeln ist. Des Weiteren betrifft die Erfindung das Hybridmodul selbst, das die Mehrfachkupplungseinrichtung aufweist.
Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, eine elektrische Maschine zur Erzeugung eines Antriebsdrehmoments mit einem Rotor, sowie eine Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.
Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors. Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden. Eine solche Anordnung führt jedoch gelegentlich zu Bauraumproblemen.

Um ein sehr kompaktes Hybridmodul mit integrierter Doppelkupplung zu realisieren, besteht ein vorteilhaftes Bauprinzip darin, die Trennkupplung und die beiden Teilkupplungen der Doppelkupplung direkt nebeneinander anzuordnen.

Aus dem Stand der Technik sind verschiedenste Ausführungsformen von Hybridmodulen bzw. deren Mehrfachkupplungseinrichtungen bekannt. Siehe z.B. US2011/259698, EP2517915 oder WO2017/028862. So offenbart die DE 10 2009 002 805 A1 einen Parallel-Hybridantrieb für Kraftfahrzeuge mit einem im Antriebsstrang angeordneten Fahrzeuggetriebe mit veränderlicher Übersetzung, einer mit der Getriebeeingangswelle antriebsverbundenen Elektromaschine und mit einem über eine Kupplungsanordnung mit der Getriebeeingangswelle kuppelbaren bzw. von dieser abkuppelbaren Verbrennungsmotor. Die Kupplungsanordnung umfasst weiterhin eine im Zugbetrieb des Verbrennungsmotors einkuppelnde Freilaufkupplung und eine dazu parallele schaltbare Reibungskupplung.

Die WO2008/052909 A1 offenbart einen Antriebsstrang für ein Hybridfahrzeug zur mechanischen Kopplung eines Verbrennungsmotors mit einer elektrischen Maschine mittels einer Kupplung. Die Kupplung kann eine Klauenkupplung umfassen, sowie ein Anfahrelement, das mit der elektrischen Maschine verbunden ist und wählbare Anteile der Antriebsleistung aus der elektrischen Maschine auskoppelt. Das Anfahrelement kann ein Wandler, eine Proportionalkupplung und/oder eine Doppelkupplung umfassen.

Aus der noch nicht veröffentlichten deutschen Patentanmeldung DE 10 2016 203 384.0 ist eine Kupplungsanordnung für einen Antriebsstrang eines Kraftfahrzeuges mit Hybridantrieb bekannt, wobei diese Kupplungsanordnung eine erste Kupplung und eine zweite Kupplung aufweist, die jeweils rotatorisch voneinander entkoppelbare Drehteile aufweisen, wobei ein erstes Drehteil der ersten Kupplung mit einem ersten Drehteil der zweiten Kupplung drehfest verbunden ist. Es ist hier als vorteilhafte Ausführungsform angegeben, dass die zweite Kupplung als Doppelkupplung, vorzugsweise als nasse bzw. nasslaufende Doppelkupplung ausgebildet ist.

Die deutsche Patentanmeldung DE 10 2016 212 846.9 lehrt eine Kupplungsanordnung für einen Antriebsstrang eines Kraftfahrzeuges mit einer Elektromaschine und einer Verbrennungskraftmaschine, deren Drehmoment zu einem Getriebe durch ein Kupplungsaggregat leitbar ist, wobei eine Trennkupplung zwischen einem Koppelorgan, das zum Einleiten von Drehmoment der Elektromaschine in Richtung des Kupplungsaggregates vorbereitet ist, und einem verbrennungskraftmaschinen-seitig antreibbaren Übertragungsorgan angeordnet ist. Ein als Kette ausgebildetes Endloszugmittel ist zur Übertragung eines Drehmoments von der Elektromaschine zum Koppelorgan eingesetzt.
Sämtliche der dargestellten Hybridmodule bzw. Kupplungseinrichtungen sind einem betriebsbedingten Verschleiß unterworfen und benötigen einen bestimmten Bauraum.

Auf Grund der Nutzung mehrerer Betätigungssysteme zur Öffnung und Schließung der einzelnen Kupplungen werden von mehreren Stellen Kräfte in die jeweilige Mehrfachkupplungseinrichtung bzw. in das jeweilige Hybridmodul eingetragen, die in den meisten Ausgestaltungen unterschiedliche Richtungen haben. Je nach Betriebszustand der einzelnen Kupplungen kann es somit zu unterschiedlichsten Belastungsformen der Kupplungen bzw. der angeschlossenen Aggregate kommen, die sich in Verschleißerscheinungen bemerkbar machen.

Der vorliegenden Erfindung liegt die Aufgabe zugrunde, eine Mehrfachkupplungseinrichtung sowie ein mit der Mehrfachkupplungseinrichtung ausgestattetes Hybridmodul für ein Kraftfahrzeug zur Verfügung zu stellen, die mit geringem Bauraum eine lange Lebensdauer aufweisen.

Diese Aufgabe wird durch die erfindungsgemäße Mehrfachkupplungseinrichtung nach Anspruch 1 sowie durch das erfindungsgemäße Hybridmodul nach Anspruch 9 gelöst. Vorteilhafte Ausführungsformen der Mehrfachkupplungseinrichtung sind in den Unteransprüchen 2 bis 8 angegeben. Eine vorteilhafte Ausgestaltung des Hybridmoduls ist in Unteranspruch 10 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.
Die Begriffe radial und axial beziehen sich im Rahmen der vorliegenden Erfindung immer auf die Rotationsachse der Mehrfachkupplungseinrichtung bzw. des Hybridmoduls.

Die Erfindung betrifft eine Mehrfachkupplungseinrichtung für ein Hybridmodul zum Ankoppeln einer Verbrennungskraftmaschine. Die Mehrfachkupplungseinrichtung umfasst eine Trennkupplung, mit der Drehmoment von der Verbrennungskraftmaschine auf die Mehrfachkupplungseinrichtung übertragbar ist und mit der die Mehrfachkupplungseinrichtung von der Verbrennungskraftmaschine trennbar ist; sowie eine weitere Kupplungsvorrichtung, mit der Drehmoment von einer elektrischen Maschine und/ oder von der Trennkupplung auf einen Antriebsstrang übertragbar ist. Die weitere Kupplungsvorrichtung kann insbesondere eine Doppelkupplungsvorrichtung mit einer ersten Teilkupplung und einer zweiten Teilkupplung sein. Weiterhin umfasst die Mehrfachkupplungseinrichtung ein Trennkupplungsbetätigungssystem zur Betätigung der Trennkupplung und ein weiteres Betätigungssystem zur Betätigung der weiteren Kupplungsvorrichtung,
sowie ein erstes Rotationslager und ein zweites Rotationslager. Es ist erfindungsgemäß vorgesehen, dass bei Betätigung des Trennkupplungsbetätigungssystems das erste Rotationslager von der vom Trennkupplungsbetätigungssystem bewirkten axialen Kraft in lediglich einer ersten axialen Richtung belastet ist, und bei Betätigung des weiteren Betätigungssystems das zweite Rotationslager von der vom weiteren Betätigungssystem bewirkten axialen Kraft in lediglich einer zweiten, der ersten axialen Richtung entgegengesetzten Richtung belastet ist. Die erste Richtung ist dabei z.B. parallel zur gemeinsamen Rotationsachse die Richtung auf den Anschluss an eine Verbrennungskraftmaschine definiert, und die zweite, der ersten Richtung entgegengesetzte Richtung ist die ebenfalls achsparallele Richtung auf den Getriebeanschluss. Damit ist verhindert, dass die beiden Rotationslager einer wechselnden axialen Belastung bzw. einem sogenannten Nulldurchgang ausgesetzt sind, so dass auf Grund der einseitigen Belastung ein geringerer Verschleiß zu verzeichnen ist

In einer Ausgestaltung der Mehrfachkupplungseinrichtung ist vorgesehen, dass diese ein Gehäuse aufweist, welches mechanisch fest mit einem Kupplungsdeckel der Mehrfachkupplungseinrichtung verbunden ist, wobei am Gehäuse das erste Rotationslager zur rotatorischen Lagerung einer Kupplungseingangswelle angeordnet ist, sowie das zweite Rotationslager zur rotatorischen Lagerung eines gemeinsamen Rotationsteils der weiteren Kupplungsvorrichtung angeordnet ist. Die Kupplungseingangswelle dient dem rotatorischen Anschluss der Mehrfachkupplungseinrichtung an eine Verbrennungskraftmaschine. Aufgrund dessen, dass eine Lagerung der Kupplungseingangswelle an der Mehrfachkupplungseinrichtung bzw. an einem diese Mehrfachkupplungseinrichtung aufweisenden Hybridmodul in den meisten Ausführungsformen sowieso nötig ist, stellt also das zweite Rotationslager keine extra benötigte Baueinheit dar, sondern ist lediglich entsprechend der Anforderungen auszulegen. Daraus ist ersichtlich, dass zur Generierung des erfindungsgemäßen Vorteils der Verschleißminderung lediglich das erste Rotationslager zusätzlich anzuordnen ist und die Mehrfachkupplungseinrichtung derart auszugestalten ist, dass die Rotationslager lediglich einseitigen Belastungen ausgesetzt sind.

Dabei kann das Trennkupplungsbetätigungssystem in oder an dem Gehäuse axial abgestützt sein.
In dieser Ausgestaltung der Mehrfachkupplungseinrichtung wird die axiale Belastung über das Gehäuse einerseits und die Kupplungseingangswelle andererseits in das erste Rotationslager eingeleitet, wobei die von dem Trennkupplungsbetätigungssystem erzeugte axiale Kraft in die Trennkupplung eingetragen wird und von dieser auf die Kupplungseingangswelle übertragen wird, die wiederum axial mit dem ersten Rotationslager verbunden ist. Das erste Rotationslager stützt sich dabei axial am Gehäuse ab, an oder in dem auch das Trennkupplungsbetätigungssystem angeordnet ist. Entsprechend stützt sich das Trennkupplungsbetätigungssystem indirekt am ersten Rotationslager ab.

Zwecks Verwendung der Mehrfachkupplungseinrichtung an einem Doppelkupplungsgetriebe ist vorgesehen, dass die weitere Kupplungsvorrichtung eine Doppelkupplungsvorrichtung mit einer ersten Teilkupplung und einer zweiten Teilkupplung ist; wobei das weitere Betätigungssystem eine erste Betätigungseinrichtung zur Betätigung der ersten Teilkupplung und eine zweite Betätigungseinrichtung zur Betätigung der zweiten Teilkupplung aufweist, und wobei die erste Betätigungseinrichtung und die zweite Betätigungseinrichtung sich am gemeinsamen Rotationsteil abstützen, welches sich am zweiten Rotationslager axial abstützt.
Entsprechend stützen sich die erste Betätigungseinrichtung und die zweite Betätigungseinrichtung indirekt am zweiten Rotationslager ab. Von der ersten Betätigungseinrichtung und der zweiten Betätigungseinrichtung werden axiale Kräfte auf das gemeinsame Rotationsteil übertragen, von dem diese axialen Kräfte wiederum auf das zweite Rotationslager übertragen werden. Vom zweiten Rotationslager werden die axialen Kräfte in das statische Gehäuse eingetragen.
Die Richtung der von dem Trennkupplungsbetätigungssystem bewirkten axialen Kraft verläuft vorzugsweise parallel zu einer gemeinsamen Rotationsachse in Richtung auf den Anschluss eines Getriebes an Getriebeeingangswellen der Mehrfachkupplungseinrichtung, und die Richtung der von dem ersten Betätigungseinrichtung und dem zweiten Betätigungseinrichtung bewirkten axialen Kräfte verläuft vorzugsweise parallel zu einer gemeinsamen Rotationsachse in Richtung auf den Anschluss einer Verbrennungskraftmaschine an der Kupplungseingangswelle. Somit sind die beiden Rotationslager ausschließlich in jeweils entgegengesetzten Richtungen axial belastet. Vorzugsweise umfasst die Trennkupplung einen Innenlamellenträger, insbesondere mit Belaglamellen, sowie einen Außenlamellenträger, insbesondere mit Stahllamellen, die zwecks Drehmomentübertragung mit einer vom Trennkupplungsbetätigungssystem aufgebrachten Kraft in Reibschluss miteinander bringbar sind, wobei der Innenlamellenträger rotationsfest mit der Kupplungseingangswelle verbunden ist und der Außenlamellenträger rotationsfest mit dem gemeinsamen Rotationsteil verbunden ist.

Die Trennkupplung kann von der Doppelkupplungsvorrichtung radial überlagert sein.

Dabei kann die Trennkupplung in Bezug zu der Doppelkupplungsvorrichtung radial innen angeordnet sein, und die beiden Teilkupplungen der Doppelkupplungsvorrichtung können im Wesentlichen axial nebeneinander angeordnet sein.

Bei der Ausgestaltung des Innenlamellenträgers mit Belaglamellen und des Außenlamellenträgers mit Stahllamellen ist vorteilhafterweise die in Wirkrichtung der vom Trennkupplungsbetätigungssystem aufgebrachten Kraft letzte Belaglamelle als einseitig wirkende Lamelle ausgestaltet.
Das bedeutet, dass diese letzte Lamelle eine sogenannte Single-Sided-Endlamelle ist, an der ein Reibschluss im Wesentlichen nur an einer Seite erzeugbar ist.
Dabei ist die Erfindung nicht auf die Ausgestaltung des Innenlamellenträgers mit Belaglamellen und des Außenlamellenträgers mit Stahllamellen eingeschränkt, sondern die Anordnung der Belaglamellen sowie der Stahllamellen kann auch an dem jeweils anderen Lamellenträger vorgesehen sein. In dieser Ausführungsvariante wäre dann auch keine einseitig wirkende Lamelle als letzte Lamelle vorzusehen.

In weiterer Ausführung der Mehrfachkupplungseinrichtung ist vorgesehen, dass die beiden Teilkupplungen jeweils einen Innenlamellenträger, insbesondere mit Belaglamellen, sowie einen Außenlamellenträger, insbesondere mit Stahllamellen, aufweisen, die zwecks Drehmomentübertragung mit einer von einer jeweiligen Betätigungseinrichtung aufgebrachten Kraft in Reibschluss miteinander bringbar sind, wobei ein jeweiliger Innenlamellenträger rotationsfest mit einer Getriebeeingangswelle verbindbar oder verbunden ist und ein jeweiliger Außenlamellenträger rotationsfest mit dem gemeinsamen Rotationsteil verbunden ist oder von diesem ausgebildet ist.

Weiterhin kann die Mehrfachkupplungseinrichtung ein Getriebeelement zur Ausbildung eines Getriebes zwischen einer elektrischen Maschine und der Mehrfachkupplungseinrichtung zwecks Übertragung einer Drehbewegung zwischen der elektrischen Maschine und der Mehrfachkupplungseinrichtung aufweisen, wobei die einzelnen Kupplungen und das Getriebeelement in einem Nassraum angeordnet sind.
Das genannte Getriebeelement kann ein Kettenrad zur Ausbildung eines Kettentriebes; ein Riemenrad zur Ausbildung eines Riementriebes; oder ein Zahnrad zur Ausbildung eines Zahnradgetriebes sein. In der Ausführungsform als Riemenrad bietet es sich an, den Riementrieb als Zahnriementrieb oder Keilriementrieb auszugestalten. Ein realisiertes Zahnradgetriebe kann einstufig oder mehrstufig ausgeführt sein.

Diese Bauweise ermöglicht den Einsatz von verschleißgeminderten Nasskupplungen, ohne auf eine Kombination mit dem Betrieb eines Elektromotors zur Ausbildung eines Hybridmoduls verzichten zu müssen. Die Mehrfachkupplungseinrichtung kann derart ausgestaltet sein, dass die Kupplungen sowie das Getriebeelement um eine gemeinsame Rotationsachse koaxial angeordnet sind. Dabei kann der wirksame Durchmesser des Getriebeelementes größer sein als der wirksame Durchmesser der mittels Reibschluss Drehmoment übertragenen Bestandteile einer jeweiligen Teilkupplung der Doppelkupplungsvorrichtung. Das heißt, dass durch eine radial äußere Anordnung des wirksamen Teilkreises des Getriebeelementes in Bezug zu den Teilkupplungen der radiale Abstand des wirksamen Teilkreises des Getriebeelementes, in dem das Drehmoment vom Getriebeelement übertragen wird, größer ist als der radiale Abstand der Lamellen der Teilkupplungen zur Rotationsachse, mit denen durch Reibschluss Drehmoment innerhalb der jeweiligen Kupplung übertragen wird. Damit lässt sich eine radial sehr kompakte Mehrfachkupplungseinrichtung bzw. ein radial sehr kompaktes Hybridmodul zur Verfügung stellen.

Der Rotor kann dabei in Bezug zur Rotationsachse der Mehrfachkupplungseinrichtung achsparallel angeordnet sein und mittels eines Getriebes mit der Mehrfachkupplungseinrichtung gekoppelt sein.

Bei der Ausgestaltung der Mehrfachkupplungseinrichtung zur Anordnung in einem Nassraum ist vorzugsweise vorgesehen, dass der Rotor der elektrischen Maschine außerhalb des Nassraums angeordnet ist und mit einem weiteren Getriebeelement rotationsfest verbindbar oder verbunden ist, welches zusammen mit dem Getriebeelement der Mehrfachkupplungseinrichtung das Getriebe ausbildet, und dass das weitere Getriebeelement ebenfalls im Nassraum angeordnet ist und zwischen dem weiteren Getriebeelement und dem Rotor der elektrischen Maschine eine Dichtung zur Abdichtung des Nassraums angeordnet ist.

Vorzugsweise umfasst das Trennkupplungsbetätigungssystem eine im Wesentlichen ringförmige Kolben-Zylinder-Einheit, deren Kolben im Wesentlichen axial translatorisch verschiebbar ist, und weiterhin ein ringförmiges Betätigungslager, welches eine rotatorische Relativbewegung zwischen der Kolben-Zylinder-Einheit und einem zu betätigenden Kupplungselement der Trennkupplung erlaubt. Die Kolben-Zylinder-Einheit ist dabei in oder an dem Gehäuse aufgenommen, welches mechanisch fest mit einem Kupplungsdeckel der Mehrfachkupplungseinrichtung verbunden ist.
Am Gehäuse ist das erste Rotationslager zur rotatorischen Lagerung der Kupplungseingangswelle angeordnet, sowie das zweite Rotationslager angeordnet zur rotatorischen Lagerung des gemeinsamen Rotationsteils der Kupplungen der Mehrfachkupplungseinrichtung. Dabei ist die ringförmige Kolben-Zylinder-Einheit radial zwischen dem ersten Lager und dem zweiten Lager angeordnet. Auch damit wird eine Volumenreduzierung in axialer Richtung bewirkt. Das gemeinsame Rotationsteil ist ein Element der Mehrfachkupplungseinrichtung, welches der Übertragung von Drehmoment zwischen der Doppelkupplungsvorrichtung und der Trennkupplung dient.
Das Gehäuse kann ein integraler Bestandteil des Kupplungsdeckels sein.
Die erste Betätigungseinrichtung und die zweite Betätigungseinrichtung können einander radial zumindest abschnittsweise überlagern. Das heißt, dass hier für die Doppelkupplungsvorrichtung ein radial geschachtelter Doppel-Zentraleinrücker oder - ausrücker zur Anwendung kommen kann. Dabei kann vorgesehen sein, dass beide Betätigungseinrichtungen jeweils eine im Wesentlichen ringförmige Kolben-Zylinder-Einheit aufweisen, deren Kolben im Wesentlichen axial translatorisch verschiebbar ist, und weiterhin jeweils ein ringförmiges Betätigungslager aufweisen, welches eine rotatorische Relativbewegung zwischen der Kolben-Zylinder-Einheit und einem zu betätigenden Kupplungselement der jeweiligen Teilkupplung erlaubt, wobei die radiale Erstreckung einer jeweiligen Kolben-Zylinder-Einheit in Bezug zur Rotationsachse größer ist als der Abstand einer Umlaufbahn eines jeweiligen Betätigungslagers zur Rotationsachse. In alternativer Ausgestaltung ist vorgesehen, dass die radialen Erstreckungen der jeweiligen Kolben-Zylinder-Einheiten und der Umlaufbahnen gleich sind. In weiterer Ausführungsform ist vorgesehen, dass die Mehrfachkupplungseinrichtung ein Stützlager aufweist, welches entlang der Rotationsachse an der Seite der Position der ersten Betätigungseinrichtung und der zweiten Betätigungseinrichtung angeordnet ist, vorzugsweise von der ersten Betätigungseinrichtung und der zweiten Betätigungseinrichtung radial überdeckt ist, und welches auf einer Getriebeeingangswelle abgestützt oder abstützbar ist. Die Getriebeeingangswelle ist vorzugsweise eine Getriebeeingangswelle eines Doppelkupplungsgetriebes, welches mit der Mehrfachkupplungseinrichtung bzw. einem damit ausgeführten Hybridmodul gekoppelt ist. Das Stützlager ist somit derart angeordnet und ausgebildet, dass es sich radial auf einer solchen Getriebeeingangswelle abstützen kann. In alternativer Ausgestaltung ist eine Abstützung an einem Gehäuse, in oder an welchem die Betätigungssysteme der beiden Teilkupplungen angeordnet sind, über das Stützlager möglich. Mit dem Stützlager ist ein unbeabsichtigtes Verkippen der gesamten Mehrfachkupplungseinrichtung verhinderbar.

Zur Lösung der Aufgabe wird außerdem ein Hybridmodul zur Verfügung gestellt, umfassend eine erfindungsgemäße Mehrfachkupplungseinrichtung sowie eine elektrische Maschine zur Erzeugung eines Antriebsdrehmoments mit einem Rotor, wobei der Rotor mittels eines Getriebes, welches das Getriebeelement der Mehrfachkupplungseinrichtung umfasst, mit der Mehrfachkupplungseinrichtung verbunden ist. Mit dem Getriebe kann somit ein Drehmoment bzw. eine Drehbewegung von der elektrischen Maschine auf die Mehrfachkupplungseinrichtung zum Antrieb der Mehrfachkupplungseinrichtung und demzufolge eines Antriebsmoduls, bzw. in umgekehrter Richtung von der Mehrfachkupplungseinrichtung auf die elektrische Maschine zwecks Rekuperation erfolgen.

Das Hybridmodul kann derart ausgestaltet sein, dass der Rotor der elektrischen Maschine außerhalb des Nassraums angeordnet ist und mit einem weiteren Getriebeelement rotationsfest verbindbar oder verbunden ist, welches zusammen mit dem Getriebeelement der Mehrfachkupplungseinrichtung das Getriebe ausbildet, und dass das weitere Getriebeelement ebenfalls im Nassraum angeordnet ist und zwischen dem weiteren Getriebeelement und dem Rotor der elektrischen Maschine eine Dichtung zur Abdichtung des Nassraums angeordnet ist.

Ergänzend wird eine Antriebsanordnung für ein Kraftfahrzeug mit einer Verbrennungskraftmaschine und einem erfindungsgemäßen Hybridmodul sowie mit einem Fahrzeuggetriebe zur Verfügung gestellt, wobei das Hybridmodul mit der Verbrennungskraftmaschine und dem Fahrzeuggetriebe mechanisch über Kupplungen des Hybridmoduls verbunden ist.

Die oben beschriebene Erfindung wird nachfolgend vor dem betreffenden technischen Hintergrund unter Bezugnahme auf die zugehörige Zeichnung, welche eine bevorzugte Ausgestaltung zeigt, detailliert erläutert. Die Erfindung wird durch die rein schematische Zeichnung in keiner Weise beschränkt, wobei anzumerken ist, dass das in der Zeichnung gezeigte Ausführungsbeispiel nicht auf die dargestellten Maße eingeschränkt ist.

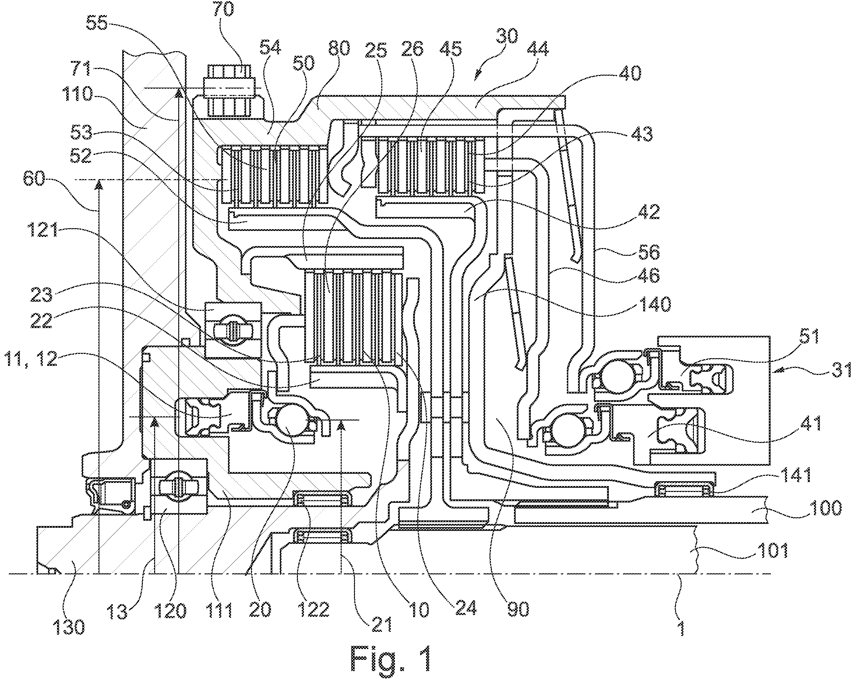

Es zeigt die einzige Figur 1 eine erfindungsgemäße Mehrfachkupplungseinrichtung in einem Teilschnitt.

Ersichtlich ist, dass auf einer gemeinsamen Rotationsachse 1 eine Trennkupplung 10 sowie eine als Doppelkupplungsvorrichtung ausgeführte weitere Kupplungsvorrichtung 30 angeordnet sind. Die Doppelkupplungsvorrichtung 30 umfasst eine erste Teilkupplung 40 und eine zweite Teilkupplung 50. Alle drei Kupplungen 10,40,50 können in einem Nassraum 90 angeordnet sein. Das bedeutet, dass in einer solchen Ausführung der Mehrfachkupplungseinrichtung alle drei Kupplungen 10,40,50 als Nasskupplungen ausgeführt sind. Des Weiteren sind alle drei Kupplungen 10,40,50 über ein gemeinsames Rotationsteil 80 rotatorisch miteinander gekoppelt.

Der Trennkupplung 10 ist ein Trennkupplungsbetätigungssystem 11 zugeordnet, welches eine ringförmige Kolben-Zylinder-Einheit 12 sowie ein Betätigungslager 20 umfasst. Die radiale Erstreckung 13 der Kolben-Zylinder-Einheit 12 ist dabei genauso groß wie der radiale Abstand der Umlaufbahn 21 des Betätigungslagers 20 zur Rotationsachse 1. Dies ermöglicht die dargestellte axiale Anordnung der Kolben-Zylinder-Einheit 12 und des Betätigungslagers 20 nebeneinander.
Es ist ersichtlich, dass der wirksame Durchmesser 71 des Getriebeelementes 70 größer ist als der wirksame Durchmesser 60 der mittels Reibschluss Drehmoment übertragenen Bestandteile der Doppelkupplungsvorrichtung 30 bzw. deren erster Teilkupplung 40 und zweiter Teilkupplung 50. Aufgrund des relativ großen Abstandes zur Rotationsachse 1 ist es möglich, die elektrische Maschine mit einer relativ geringen Antriebsleistung bzw. daraus resultierenden Drehmoment auszugestalten. Dies sowie die Möglichkeit, die elektrische Maschine achsparallel beabstandet zur Rotationsachse anzuordnen, ermöglicht die Realisierung eines sehr bauraumeffizienten Hybridmoduls bzw. der flexibleren Anordnung der Aggregate des Hybridmoduls einem Antriebsstrang eines Kraftfahrzeugs.

Von einer Antriebswelle bzw. Kupplungseingangswelle 130, die mit einem hier nicht dargestellten Verbrennungsaggregat koppelbar ist, kann Drehmoment in die Trennkupplung 10 über deren Innenlamellenträger 22 eingeleitet werden. Bei Schließung der Trennkupplung 10 mittels Betätigung des Trennkupplungsbetätigungssystems 11 wird von der Trennkupplung 10 Drehmoment über den Außenlamellenträger 25 der Trennkupplung 10 auf das gemeinsame Rotationsteil 80 übertragen. Je nach Schließung einer der mit dem gemeinsamen Rotationsteil 80 verbundenen Teilkupplung 40,50 wird von dieser Teilkupplung 40,50 Drehmoment über einen jeweiligen ersten Innenlamellenträger 42 bzw. zweiten Innenlamellenträger 52 über den jeweiligen ersten Außenlamellenträger 44 bzw. zweiten Außenlamellenträger 54 auf eine erste Getriebeeingangswelle 100 bzw. auf eine zweite Getriebeeingangswelle 101 übertragen. Zu diesem Zweck wird mittels der ersten Betätigungseirichtung 41 ein erster Drucktopf 46 bzw. mittels einer zweiten Betätigungseirichtung 51 ein zweiter Drucktopf 56 zur Schließung der jeweiligen Teilkupplung 40,50 axial verschoben.

Mit einem Kupplungsdeckel 110 der Mehrfachkupplungseinrichtung ist ein Gehäuse 111 fest verbunden, welches zur Aufnahme des Trennkupplungsbetätigungssystems 11 dient. Zwischen der Kupplungseingangswelle 130 und dem Gehäuse 111 ist ein erstes Rotationslager 120 angeordnet, und zwischen dem Gehäuse 111 und dem gemeinsamen Rotationsteil 80 ist ein zweites Rotationslager 121 angeordnet. Die Kupplungseingangswelle 130 wird insgesamt durch das erste Rotationslager 120 sowie ein axial daneben angeordnetes Nadellager 122 abgestützt.
Die gesamte Mehrfachkupplungseinrichtung ist über ein den Getriebeeingangswellen 100, 101 zugewandtes Stützteil 140 sowie ein daran befindliches Stützlager 141 in Form eines Nadellagers gegen unbeabsichtigtes Verkippen gesichert.

Die vom Trennkupplungsbetätigungssystem 11 ausgeübte axiale Kraft wirkt derart auf die Trennkupplung 10, dass die Belaglamellen 23 sowie die Stahllamellen 26 zusammen gepresst werden, so das über diese Lamellen 23,26 ein Drehmoment übertragen werden kann. Die Gegenkraft zur vom Trennkupplungsbetätigungssystem 11 ausgeübten axialen Kraft wird dabei von der letzten Belaglamelle 24 aufgebracht, die in axialer Richtung fest mit der Kupplungseingangswelle 130 verbunden ist. Auf der Kupplungseingangswelle 130 sitzt das erste Rotationslager 120, welches zwischen einem Absatz der Kupplungseingangswelle 130 und einem Sprengring axial fixiert ist. Dadurch wird die von dem Trennkupplungsbetätigungssystem 11 ausgeübte axiale Kraft auf das erste Rotationslager 120 übertragen. Die vom Trennkupplungsbetätigungssystem 11 ausgeübte axiale Kraft wirkt dabei parallel zur Rotationsachse 1 immer in Richtung der Getriebeeingangswellen 100, 101, sodass das erste Rotationslager 120 immer nur in einer Richtung belastet wird.
Die als Doppelkupplungsvorrichtung ausgestaltete weitere Kupplungsvorrichtung 30 umfasst die erste Teilkupplung 40 und die zweite Teilkupplung 50, denen eine erste Betätigungseinrichtung 41 und eine zweite Betätigungseinrichtung 51 zugeordnet sind. Über deren Drucktöpfe 46,56 übertragen diese Betätigungseinrichtungen 41,51 ebenfalls axiale Kräfte, die jedoch der vom Trennkupplungsbetätigungssystem 11 ausgeübten axialen Kraft entgegen gerichtet sind. Über die beiden Innenlamellenträger 42,52 sowie die jeweiligen Belaglamellen 43,53 und die alternierend dazu angeordneten Stahllamellen 45,55 werden diese von den Betätigungseinrichtungen 41,51 generierten axialen Kräfte auf den ersten Außenlamellenträger 44 und den zweiten Außenlamellenträger 54 übertragen. Die beiden Außenlamellenträger 44,54 sind dabei an dem gemeinsamen Rotationsteil 80 angeordnet oder auch von diesem ausgebildet. Das gemeinsame Rotationsteil 80 stützt sich wiederum axial an dem zweiten Rotationslager 121 ab, welches sich wiederum axial an dem Gehäuse 111 abstützt. Die von den beiden Betätigungseinrichtungen 41,51 erzeugten axialen Kräfte wirken dabei lediglich in eine Richtung, nämlich parallel zur Rotationsachse 1 in Richtung auf die Kupplungseingangswelle 130. Entsprechend ist das zweite Rotationslager 121 ausschließlich in dieser Richtung belastet.
Daraus ist ersichtlich, dass die beiden Rotationslager 120,121 keinen wechselnden Belastungen ausgesetzt sind, sodass es hier nicht zu einem wechselnden Lagerspiel kommen kann und somit über die Lebensdauer der Mehrfachkupplungseinrichtung bzw. eines damit ausgestalteten Hybridmoduls ein geringerer Lagerverschleiß zu verzeichnen ist.

An dem gemeinsamen Rotationsteil 80 ist ein Getriebeelement 70 fest angeordnet, welches in der hier dargestellten Ausführungsform ein Kettenrad zur Ausbildung eines Kettentriebes ist. Dieser Kettentrieb ist mit einem Ritzel einer hier nicht dargestellten elektrischen Maschine verbunden, die außerhalb des Nassraums 90 angeordnet ist. Derart lässt sich von der elektrischen Maschine auf das gemeinsame Rotationsteil 80 und demzufolge auf alle drei Kupplungen 10,40, 50 Drehmoment übertragen, und in umgekehrter Richtung. Zwischen dem der elektrischen Maschine zugeordneten Ritzel und dem Rotor der elektrischen Maschine ist eine hier nicht dargestellte Dichtung zur Abdichtung des Nassraums 90 angeordnet.

Die der ersten Teilkupplung 40 zugeordnete erste Betätigungseinrichtung 41 und der zweiten Teilkupplung 50 zugeordnete zweite Betätigungseinrichtung 51 sind radial ineinander verschachtelt angeordnet, wobei jedoch auch eine axial nebeneinander realisierte Anordnung nicht ausgeschlossen werden soll.

Insgesamt stellt die vorliegende Erfindung eine Mehrfachkupplungseinrichtung sowie ein Hybridmodul zur Verfügung, die aufgrund der einseitigen Belastungen der Rotationslager einen geringen Lagerverschleiß aufweist.

### Bezugszeichenliste

- 1: Rotationsachse
- 10: Trennkupplung
- 11: Trennkupplungsbetätigungssystem
- 12: Kolben-Zylinder-Einheit
- 13: Radiale Erstreckung
- 20: Betätigungslager
- 21: Radialer Abstand der Umlaufbahn
- 22: Innenlamellenträger
- 23: Belaglamelle
- 24: Letzte Belaglamelle
- 25: Außenlamellenträger
- 26: Stahllamelle
- 30: weitere Kupplungsvorrichtung
- 31: weiteres Betätigungssystem
- 40: erste Teilkupplung
- 41: erste Betätigungseinrichtung
- 42: erster Innenlamellenträger
- 43: Belaglamelle
- 44: erster Außenlamellenträger
- 45: Stahllamelle
- 46: erster Drucktopf
- 50: zweite Teilkupplung
- 51: zweite Betätigungseinrichtung
- 52: zweiter Innenlamellenträger
- 53: Belaglamelle
- 54: zweiter Außenlamellenträger
- 55: Stahllamelle
- 56: zweiter Drucktopf
- 60: wirksamer Durchmesser
- 70: Getriebeelement
- 71: wirksamer Durchmesser
- 80: gemeinsames Rotationsteil
- 90: Nassraum
- 100: erste Getriebeeingangswelle
- 101: zweite Getriebeeingangswelle
- 110: Kupplungsdeckel
- 111: Gehäuse
- 120: erstes Rotationslager
- 121: zweites Rotationslager
- 122: Nadellager
- 130: Kupplungseingangswelle
- 140: Stützteil
- 141: Stützlager

## Patentansprüche

1. Mehrfachkupplungseinrichtung für ein Hybridmodul zum Ankoppeln einer Verbrennungskraftmaschine, umfassend:
eine Trennkupplung (10), mit der Drehmoment von der Verbrennungskraftmaschine auf die Mehrfachkupplungseinrichtung übertragbar ist und mit der die Mehrfachkupplungseinrichtung von der Verbrennungskraftmaschine trennbar ist; und eine weitere Kupplungsvorrichtung (30), mit der Drehmoment von einer elektrischen Maschine und/ oder von der Trennkupplung (10) auf einen Antriebsstrang übertragbar ist, insbesondere eine Doppelkupplungsvorrichtung) mit einer ersten Teilkupplung (40) und einer zweiten Teilkupplung (50);
ein Trennkupplungsbetätigungssystem (11) zur Betätigung der Trennkupplung (10) und ein weiteres Betätigungssystem (31) zur Betätigung der weiteren Kupplungsvorrichtung; sowie ein erstes Rotationslager (120) und ein zweites Rotationslager (121), wobei bei Betätigung des Trennkupplungsbetätigungssystems (11) das erste Rotationslager (120) von der vom Trennkupplungsbetätigungssystem (11) bewirkten axialen Kraft in lediglich einer ersten axialen Richtung belastet ist,
und bei Betätigung des weiteren Betätigungssystems (31) das zweite Rotationslager (121) von der vom weiteren Betätigungssystem (31) bewirkten axialen Kraft in lediglich einer zweiten, der ersten axialen Richtung entgegengesetzten Richtung belastet ist, **dadurch gekennzeichnet, dass** die Mehrfachkupplungseinrichtung ein Gehäuse (111) aufweist, welches fest mit einem Kupplungsdeckel (110) der Mehrfachkupplungseinrichtung verbunden ist und zur Aufnahme des Trennkupplungsbetätigungssystems (11) dient.

2. Mehrfachkupplungseinrichtung nach Anspruch 1, **dadurch gekennzeichnet, dass** am Gehäuse (111) das erste Rotationslager (120) zur rotatorischen Lagerung einer Kupplungseingangswelle (130) angeordnet ist, sowie das zweite Rotationslager (121) zur rotatorischen Lagerung eines gemeinsamen Rotationsteils (80) der weiteren Kupplungsvorrichtung (30) angeordnet ist.

3. Mehrfachkupplungseinrichtung nach Anspruch 2, dass das Trennkupplungsbetätigungssystem (11) in oder an dem Gehäuse (111) axial abgestützt ist.

4. Mehrfachkupplungseinrichtung nach einem der vorhergehenden Ansprüche, **dadurch gekennzeichnet, dass** die weitere Kupplungsvorrichtung (30) eine Doppelkupplungsvorrichtung mit einer ersten Teilkupplung (40) und einer zweiten Teilkupplung (50) ist; wobei das weitere Betätigungssystem (31) eine erste Betätigungseinrichtung (41) zur Betätigung der ersten Teilkupplung (40) und eine zweite Betätigungseinrichtung (51) zur Betätigung der zweiten Teilkupplung (50) aufweist, und wobei die erste Betätigungseinrichtung (41) und die zweite Betätigungseinrichtung (51) sich am gemeinsamen Rotationsteil (80) abstützen, welches sich am zweiten Rotationslager axial abstützt.

5. Mehrfachkupplungseinrichtung nach einem der Ansprüche 2 bis 4, **dadurch gekennzeichnet, dass** die Trennkupplung (10) einen Innenlamellenträger (22), insbesondere mit Belaglamellen (23), sowie einen Außenlamellenträger (25), insbesondere mit Stahllamellen (26), aufweist, die zwecks Drehmomentübertragung mit einer vom Trennkupplungsbetätigungssystem (11) aufgebrachten Kraft in Reibschluss miteinander bringbar sind, wobei der Innenlamellenträger (22) rotationsfest mit der Kupplungseingangswelle (130) verbunden ist und der Außenlamellenträger (25) rotationsfest mit dem gemeinsamen Rotationsteil (80) verbunden ist.

6. Mehrfachkupplungseinrichtung nach Anspruch 5, **dadurch gekennzeichnet, dass** bei Ausgestaltung des Innenlamellenträgers (22) mit Belaglamellen (23) und des Außenlamellenträgers (25) mit Stahllamellen (26) die in Wirkrichtung der vom Trennkupplungsbetätigungssystem (11) aufgebrachten Kraft letzte Belaglamelle (24) als einseitig wirkende Lamelle ausgestaltet ist.

7. Mehrfachkupplungseinrichtung nach einem der Ansprüche 4 bis 6, **dadurch gekennzeichnet, dass** die beiden Teilkupplungen (40,50) jeweils einen Innenlamellenträger (42,52), insbesondere mit Belaglamellen (43,53), sowie einen Außenlamellenträger (44,54), insbesondere mit Stahllamellen (45,55), aufweisen, die zwecks Drehmomentübertragung mit einer von einer jeweiligen Betätigungseinrichtung (41,51) aufgebrachten Kraft in Reibschluss miteinander bringbar sind, wobei ein jeweiliger Innenlamellenträger (42,52) rotationsfest mit einer Getriebeeingangswelle (100,101) verbunden ist und ein jeweiliger Außenlamellenträger (44,54) rotationsfest mit dem gemeinsamen Rotationsteil (80) verbunden ist oder von diesem ausgebildet ist.

8. Mehrfachkupplungseinrichtung nach einem der vorhergehenden Ansprüche, **dadurch gekennzeichnet, dass** die Mehrfachkupplungseinrichtung ein Getriebeelement (70) zur Ausbildung eines Getriebes zwischen einer elektrischen Maschine und der Mehrfachkupplungseinrichtung zwecks Übertragung einer Drehbewegung zwischen der elektrischen Maschine und der Mehrfachkupplungseinrichtung aufweist, wobei die einzelnen Kupplungen und das Getriebeelement in einem Nassraum (90) angeordnet sind.

9. Hybridmodul, umfassend eine Mehrfachkupplungseinrichtung nach einem der Ansprüche 1 bis 8 sowie eine elektrische Maschine zur Erzeugung eines Antriebsdrehmoments mit einem Rotor, wobei der Rotor mit der Mehrfachkupplungseinrichtung rotatorisch verbunden ist.

10. Hybridmodul nach Anspruch 9, dass der Rotor der elektrischen Maschine außerhalb eines Nassraums (90) angeordnet ist und mit einem weiteren Getriebeelement rotationsfest verbindbar oder verbunden ist, welches zusammen mit dem Getriebeelement (70) der Mehrfachkupplungseinrichtung das Getriebe ausbildet, und dass das weitere Getriebeelement ebenfalls im Nassraum (90) angeordnet ist und zwischen dem weiteren Getriebeelement und dem Rotor der elektrischen Maschine eine Dichtung zur Abdichtung des Nassraums (90) angeordnet ist.

## Claims

1. A multi-clutch device for a hybrid module for coupling an internal combustion engine, comprising:
a disconnect clutch (10) with which torque can be transmitted from the internal combustion engine to the multi-clutch device and with which the multi-clutch device can be disconnected from the internal combustion engine; and a further clutch device (30) with which torque can be transmitted from an electrical machine and/or from the disconnect clutch (10) to a drive train, in particular a dual clutch device having a first sub-clutch (40) and a second sub-clutch (50);
a disconnect clutch actuation system (11) for actuating the disconnect clutch (10) and a further actuation system (31) for actuating the further clutch device; and a first rotary bearing (120) and a second rotary bearing (121), wherein upon actuation of the disconnect clutch actuation system (11), the first rotary bearing (120) is only loaded in a first axial direction by the axial force brought about by the disconnect clutch actuation system (11),
and upon actuation of the further actuation system (31), the second rotary bearing (121) is only loaded in only a second direction, opposite the first axial direction, by the axial force brought about by the further actuation system (31), **characterised in that** the multi-clutch device comprises a housing (111) which is fixedly connected to a clutch cover (110) of the multi-clutch device and which serves to accommodate the clutch actuation system (11).

2. The multi-clutch device according to claim 1, **characterised in that** the first rotary bearing (120) is arranged on the housing (111) for the rotary mounting of a clutch input shaft (130) and the second rotary bearing (121) is arranged thereon for the rotary mounting of a common rotary part (80) of the further clutch device (30).

3. The multi-clutch device according to claim 2, that the disconnect clutch actuation system (11) is axially supported in or on the housing (111).

4. The multi-clutch device according to any one of the preceding claims, **characterised in that** the further clutch device (30) is a dual clutch device having a first sub-clutch (40) and a second sub-clutch (50); wherein the further actuation system (31) comprises a first actuating device (41) for actuating the first sub-clutch (40) and a second actuating device (51) for actuating the second sub-clutch (50), and wherein the first actuating device (41) and the second actuating device (51) are supported on the common rotary part (80), which is axially supported on the second rotary bearing.

5. The multi-clutch device according to any one of claims 2 to 4, **characterised in that** the disconnect clutch (10) comprises an inner plate carrier (22), in particular with lining plates (23), and an outer plate carrier (25), in particular with steel plates (26), which can be brought into frictional engagement with one another by a force applied by the disconnect clutch actuation system (11) for the purpose of torque transmission, wherein the inner plate carrier (22) is connected in a rotationally fixed manner to the clutch input shaft (130) and the outer plate carrier (25) is connected in a rotationally fixed manner to the common rotary part (80).

6. The multi-clutch device according to claim 5, **characterised in that** when the inner plate carrier (22) is formed with lining plates (23) and the outer plate carrier (25) is formed with steel plates (26), the last lining plate (24) in the direction of action of the force applied by the disconnect clutch actuation system (11) is formed as a plate acting unilaterally.

7. The multi-clutch device according to any one of claims 4 to 6, **characterised in that** the two sub-clutches (40, 50) each have an inner plate carrier (42, 52), in particular with lining plates (43, 53), and an outer plate carrier (44, 54), in particular with steel plates (45, 55), which can be brought into frictional engagement with one another by a force applied by a respective actuating device (41, 51) for the purpose of torque transmission, wherein a respective inner plate carrier (42, 52) is connected in a rotationally fixed manner to a transmission input shaft (100, 101) and a respective outer plate carrier (44, 54) is connected in a rotationally fixed manner to the common rotary part (80) or is formed by the latter.

8. The multi-clutch device according to any one of the preceding claims, **characterised in that** the multi-clutch device comprises a gear element (70) for forming a gear between an electrical machine and the multi-clutch device for the purpose of transmitting a rotary movement between the electrical machine and the multi-clutch device, wherein the individual clutches and the gear element are arranged in a wet space (90).

9. A hybrid module comprising a multi-clutch device according to any one of claims 1 to 8 and an electrical machine for generating a drive torque with a rotor, wherein the rotor is rotationally connected to the multi-clutch device.

10. The hybrid module according to claim 9, that the rotor of the electrical machine is arranged outside of a wet space (90) and can be or is connected in a rotationally fixed manner to a further gear element, which forms the gear together with the gear element (70) of the multi-clutch device, and in that the further gear element is also arranged in the wet space (90) and a seal for sealing the wet space (90) is arranged between the further gear element and the rotor of the electrical machine.

## Revendications

1. Dispositif d'embrayage multiple pour un module hybride pour coupler un moteur à combustion interne, comprenant :
un embrayage de séparation (10) avec lequel le couple peut être transmis du moteur à combustion interne au dispositif à embrayage multiple et avec lequel le dispositif à embrayage multiple peut être séparé du moteur à combustion interne ; et un autre dispositif d'embrayage (30) avec lequel le couple peut être transmis d'une machine électrique et/ou de l'embrayage de déconnexion (10) à une chaîne cinématique, en particulier un dispositif à double embrayage avec un premier embrayage partiel (40) et un second embrayage partiel (50) ;
un système d'actionnement d'embrayage de déconnexion (11) pour actionner l'embrayage de déconnexion (10) et un autre système d'actionnement (31) pour actionner l'autre dispositif d'embrayage ; et un premier palier de rotation (120) et un second palier de rotation (121), le premier palier de rotation (120) étant chargé uniquement dans une première direction axiale par la force axiale provoquée par le système d'actionnement d'embrayage de séparation (11) lorsque le système d'actionnement d'embrayage de déconnexion (11) est actionné,
et lors de l'actionnement du système d'actionnement supplémentaire (31), le second palier rotatif (121) est chargé par la force axiale provoquée par le système d'actionnement supplémentaire (31) uniquement dans une seconde direction opposée à la première direction axiale, **caractérisé en ce que** le dispositif d'embrayage multiple comprend un boîtier (111), qui est relié à demeure à un couvercle d'embrayage (110) du dispositif d'embrayage multiple et sert à recevoir le système d'actionnement d'embrayage (11).

2. Dispositif d'embrayage multiple selon la revendication 1, **caractérisé en ce que** le premier palier rotatif (120) pour le montage rotatif d'un arbre d'entrée d'embrayage (130) est disposé sur le carter (111), ainsi que le second palier rotatif (121) pour le montage rotatif d'une partie rotative commune (80) de l'autre dispositif d'embrayage (30).

3. Dispositif d'embrayage multiple selon la revendication 2, en ce que le système d'actionnement d'embrayage de déconnexion (11) est supporté axialement dans ou sur le carter (111).

4. Dispositif d'embrayage multiple selon l'une des revendications précédentes, **caractérisé en ce que** l'autre dispositif d'embrayage (30) est un dispositif à double embrayage avec un premier embrayage partiel (40) et un second embrayage partiel (50) ; dans lequel l'autre système d'actionnement (31) a un premier dispositif d'actionnement (41) pour actionner le premier embrayage partiel (40) et un second dispositif d'actionnement (51) pour actionner le second embrayage partiel (50), et dans lequel le premier dispositif d'actionnement (41) et le second dispositif d'actionnement (51) sont supportés sur la partie rotative commune (80), qui est supportée axialement sur le second palier rotatif.

5. Dispositif d'embrayage multiple selon l'une des revendications 2 à 4, **caractérisé en ce que** l'embrayage de séparation (10) présente un support de plaque interne (22), en particulier avec des plaques de revêtement (23), et un support de plaque externe (25), en particulier avec des plaques d'acier (26), pour la transmission du couple qui peuvent être amenés en contact par friction l'un avec l'autre par une force appliquée par le système d'actionnement d'embrayage de déconnexion (11), le support de disque intérieur (22) étant connecté de manière fixe en rotation à l'arbre d'entrée d'embrayage (130) et le support de disque externe (25) étant connecté de manière fixe en rotation à la partie rotative commune (80).

6. Dispositif d'embrayage multiple selon la revendication 5, **caractérisé en ce que** lorsque le support de disque intérieur (22) est conçu avec des disques de garniture (23) et le support de disque extérieur (25) avec des disques en acier (26), le dernier disque de garniture (24) appliqué dans le sens de l'action de la force exercée par le système d'actionnement d'embrayage (11) est conçue sous forme de lame agissant unilatéralement.

7. Dispositif d'embrayage multiple selon l'une des revendications 4 à 6, **caractérisé en ce que** les deux embrayages partiels (40, 50) ont chacun un support de disque interne (42, 52), en particulier avec des disques de garniture (43, 53), et un support de disque externe (44, 54), en particulier avec des plaques en acier (45, 55), qui peuvent être mises en contact par friction les unes avec les autres pour la transmission du couple avec une force appliquée par un dispositif d'actionnement respectif (41, 51), un support de plaque interne respectif (42, 52) étant connecté de manière fixe en rotation à un arbre d'entrée de transmission (100, 101) et un support de disque externe respectif (44, 54) est connecté de manière fixe en rotation à la partie rotative commune (80) ou est formé par cette dernière.

8. Dispositif d'embrayage multiple selon l'une des revendications précédentes, **caractérisé en ce que** le dispositif d'embrayage multiple présente un élément d'engrenage (70) pour former un engrenage entre une machine électrique et le dispositif d'embrayage multiple en vue de transmettre un mouvement de rotation entre la machine électrique et le dispositif d'embrayage multiple, les embrayages individuels et l'élément d'engrenage étant installés dans une pièce humide (90).

9. Module hybride comprenant un dispositif d'embrayage multiple selon l'une des revendications 1 à 8 et une machine électrique pour générer un couple d'entraînement avec un rotor, le rotor étant relié en rotation au dispositif d'embrayage multiple.

10. Module hybride selon la revendication 9, le rotor de la machine électrique étant disposé à l'extérieur d'une pièce humide (90) et pouvant être connecté ou étant connecté de manière fixe en rotation à un autre élément d'engrenage qui, avec l'élément d'engrenage (70) du dispositif à embrayage multiple, forme l'engrenage, et l'autre élément d'engrenage également étant disposé dans la pièce humide (90) et un joint pour sceller la pièce humide (90) est disposé entre l'autre élément d'engrenage et le rotor de la machine électrique.
